# EUROPEAN PATENT SPECIFICATION

(11) **EP 4 654 659 B1**
(45) Date of publication and mention of the grant of the patent: **02.12.2026**
(21) Application number: 24305819.5
(22) Date of filing: 24.05.2024
(51) Int. Cl.: H04W 28/02

(54) **AN INFRASTRUCTURE-ASSISTED CONGESTION CONTROL ALGORITHM FOR SIDELINK COMMUNICATIONS**
INFRASTRUKTURUNTERSTÜTZTER ÜBERLASTUNGSSTEUERUNGSALGORITHMUS FÜR SIDELINK-KOMMUNIKATIONEN
ALGORITHME DE CONTRÔLE DE CONGESTION ASSISTÉ PAR INFRASTRUCTURE POUR COMMUNICATIONS DE LIAISON LATÉRALE

(43) Date of publication of application: 26.11.2025
(73) Proprietor: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: BOUTTIER, Arnaud, 35708 RENNES CÉDEX 7 (FR)
(74) Representative: Plasseraud IP

(56) References cited:
- EP-A1- 4 247 019
- WO-A1-2018/084520

## Description

### Technical Field

This disclosure pertains to the field of telecommunications.

The disclosure more particularly relates to a communication method, a computer readable medium and a corresponding communication system.

### Background Art

In modern communication systems, particularly in vehicle-to-everything (V2X) networks, efficient and reliable data transmission is a permanent concern. These systems facilitate various applications, from improving road safety to enabling autonomous driving.

The management of network congestion has historically been a challenging aspect of wireless communication systems.

Traditional approaches to congestion control in vehicular networks, like LTE V2X and NR V2X, have generally relied on static congestion control algorithms. These algorithms, while effective in certain scenarios, often struggle to adapt to the dynamically changing traffic conditions inherent in V2X environments. This limitation can lead to sub-optimal resource allocation, increased packet loss, and degraded network performance, particularly in dense traffic scenarios.

As vehicles become more reliant on real-time data exchange for navigation and safety functions, there is a need for a more adaptive, intelligent congestion control mechanism ensuring optimal use of network resources, minimizing congestion, and enhancing the overall quality of service.

Document WO2018/084520A1 discloses a method of determining a table comprising congestion control information such as CBR range index, ProSE Per-Packet Priority and transmission parameter set index, and sending the table to a UE. Document EP4247019A1 discloses a method of aggregating Channel occupancy Ratio for all nodes in the network and making the congestion control decision for all the nodes.

### Summary

This disclosure improves the situation.

According to the claimed invention, there is provided a communication method comprising:
- determining a congestion ratio for a communication channel based on measured data;
- obtaining, for each terminal in a set of terminals, a requirement for radio resources related to the communication channel; and
- determining, individually for each terminal in the set of terminals, a respective congestion control table based on the determined congestion ratio of the communication channel and further based on the requirement of each respective terminal,

the method further comprising classifying each terminal based on its requirement for radio resources into distinct categories and configuring the congestion control table based on the category of the terminal,
wherein the categories are determined based on traffic patterns of the terminals, and
wherein the traffic pattern of a terminal is determined by collecting measurements at the terminal that indicate a behaviour of the terminal under varying network congestion conditions and estimating a relationship between the behaviour of the terminal and the network congestion conditions.

According to the claimed invention, there is further provided a computer-readable medium storing instructions that, when executed by a processor, cause the processor to perform the above communication method.

According to the claimed invention, there is further provided a communication system comprising:
- a congestion ratio determination module configured to determine a congestion ratio for a communication channel based on measured data;
- a resource requirement obtaining module configured to obtain, for each terminal in a set of terminals, a requirement for radio resources related to the communication channel; and
- a congestion control table configuration module configured to determine, individually for each terminal in the set of terminals, a respective congestion control table based on the determined congestion ratio of the communication channel and further based on the requirement of each respective terminal,

wherein the communication system is further configured to classify each terminal based on its requirement for radio resources into distinct categories and configuring the congestion control table based on the category of the terminal,
wherein the categories are determined based on traffic patterns of the terminals, and
wherein the traffic pattern of a terminal is determined by collecting measurements at the terminal that indicate a behaviour of the terminal under varying network congestion conditions and estimating a relationship between the behaviour of the terminal and the network congestion conditions.

The proposed technique offers significant technical advantages, including:
improved network efficiency through autonomous and adaptive resource allocation by each terminal enhanced quality of service due to individualized congestion control strategies for each terminal, reduction in network congestion and packet loss, especially in high-density scenarios such as V2X systems,
scalability to accommodate varying network sizes and traffic patterns, and
facilitation of smoother and more reliable communication.

In an example, the communication channel is part of a Vehicle-to-Everything (V2X) system. The applicability of the proposed technique in modern vehicular communication networks contributes to increased safety in autonomous driving and intelligent traffic systems.

The proposed technique is versatile across different technological standards. In an example, the V2X system operates in at least one of the following modes: mode 4 in LTE V2X and mode 2 in NR V2X.

According to the claimed invention, the communication method comprises classifying each terminal based on its requirement for radio resources into distinct categories and configuring the congestion control table based on the category (also referred to as the class in a machine learning framework) of the terminal. Categorization allows for streamlined and efficient congestion control management, as terminals with similar resource requirements are grouped, simplifying the configuration process. It reduces the complexity and computational overhead associated with individually analyzing each terminal, particularly beneficial in dense network environments. Further, classifying the terminals based on their requirement for radio resources reinforces scalability of the proposed technique, as it can easily accommodate a large number of terminals without the need for extensive individual analysis.

According to the claimed invention, the categories are determined based on traffic patterns of the terminals. "Traffic patterns" in the context of this document can be defined as distinctive communication behaviors of terminals (e.g., vehicles in a V2X system) over a network, characterized by variables such as data transmission rate, frequency of communication, scheduling parameters, types of data transmitted, and communication behaviors during different times or in different traffic and radio conditions. The channel occupancy ratio of a terminal as a function of the channel busy ratio is a particular example of a traffic pattern of the terminal. Other particular examples of traffic pattern of a terminal may include aspects relating to adaptations of packet size, transmission power and/or transmission timing, and/or frequency hopping as a function of observed channel conditions or traffic load. Traffic patterns provide a detailed insight into the terminal's behavior, ensuring that the congestion control strategy is closely aligned with actual usage patterns. This approach then allows for adaptive and responsive congestion control at the physical layer or at another layer such as the application layer, as it may consider, directly or indirectly, dynamic factors such as data transmission rate and communication frequency (at the subcarrier level, or at the subchannel level, or in terms of switching between different frequency bands).

According to the claimed invention, the traffic pattern of a terminal is determined by collecting measurements at the terminal that indicate a behavior of the terminal under varying network load conditions and estimating a relationship between the behaviour of the terminal and the network load conditions. The measurements may for instance relate to channel occupancy ratio as an example of measurement representing a behaviour of the terminal and channel busy ratio as an example of measurement representing a network congestion condition. Among other possibilities, a curve fitting technique may be used to estimate the relationship between the behavior of the terminal and the network congestion conditions. This approach allows terminals to autonomously determine their traffic patterns without external intervention or additional signaling, reducing network overhead. Further, it allows the terminals to determine and access to real-time, accurate metrics on how their own behavior is affected by channel congestion, leading to more precise congestion control.

In an example, the communication method further comprises incorporating the use of side units, distinct from the terminals and in communication with the terminals using the communication channel, for determining the requirement for radio resources of each terminal. Utilizing side units aids in accurately determining resource needs, leveraging additional data points for a more comprehensive analysis.

In an example, the congestion control tables are dynamically updated based on real-time traffic conditions. This enhances responsiveness and efficiency of congestion control according to the proposed technique.

In an example, the congestion control tables are configured to enforce at least one parameter for Quality of Service (QoS) for each terminal. This ensures that critical communication requirements are met, improving overall network performance.

In an example, the at least one parameter include at least one of the following: packet error ratio, packet delay budget, and priority. This allows for targeted control over specific network performance aspects.

In an example, the communication method further comprises using a federated learning approach to refine the configuration of the congestion control tables based on collective data from multiple terminals. For instance, the federated learning approach may be used to estimate the relationship between the behaviour of the terminals under varying network load conditions. Federated learning has numerous advantages over centralized data gathering and learning, especially in contexts such as V2X systems. These advantages include better localized decisions, limited overhead since only model parameters are exchanged rather than actual measurements, resilience to network issues, scalability, privacy, etc.

In an example, the federated learning approach includes clustering terminals based on their traffic patterns. For example, a federated clustering algorithm may be utilized.

In an example, the set of terminals is a set of managed terminals and the congestion control table for a terminal is adjusted to account for unmanaged terminals that are distinct from the set of managed terminals and share the same radio resources. This ensures fair resource allocation even in shared environments.

In an example, the adjustment is based on an estimated proportion of resources used by unmanaged terminals. This allows for a balanced network load, preventing resource monopolization.

In an example, the congestion ratio is determined using at least one of the following metrics: channel busy ratio (CBR) and channel occupancy ratio (CR).

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general-purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

### Brief Description of Drawings

Other features, details and advantages will be shown in the following detailed description and on the figures, on which:
**Fig. 1**

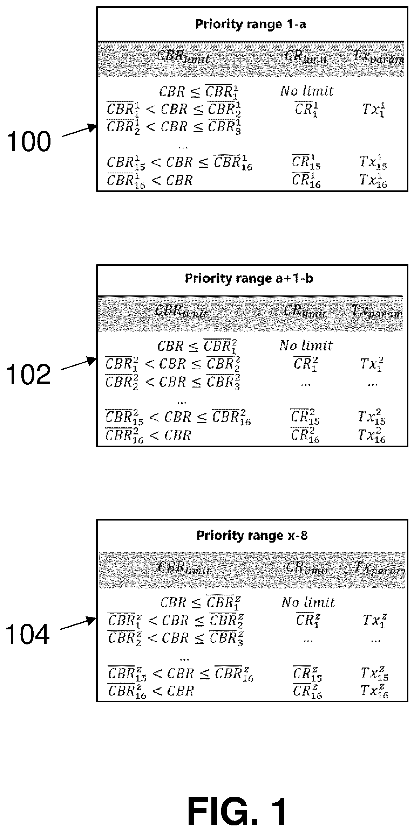

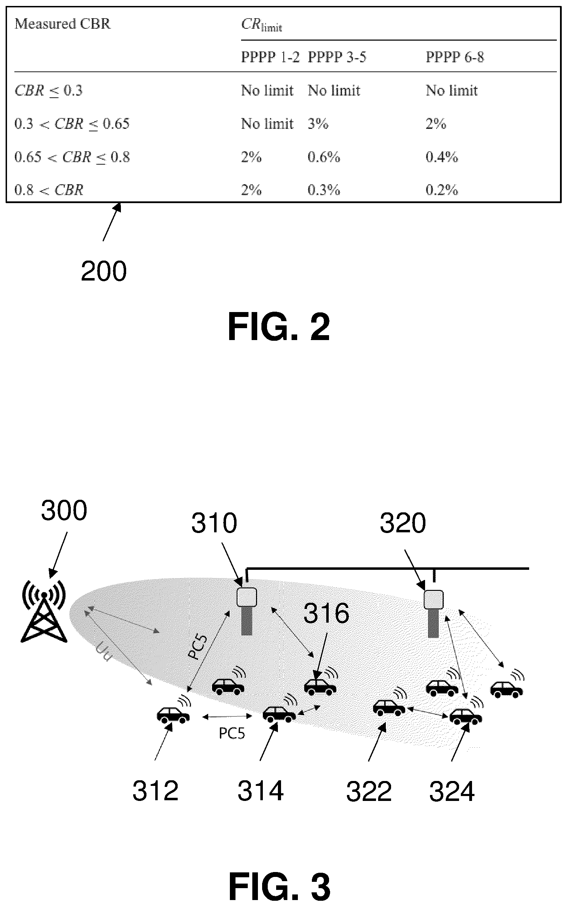

   [Fig. 1] and [Fig. 2] illustrate examples of known configurations for congestion control tables.
**Fig. 3**
   [Fig. 3] illustrates an example of V2X communication system.
**Fig. 4**

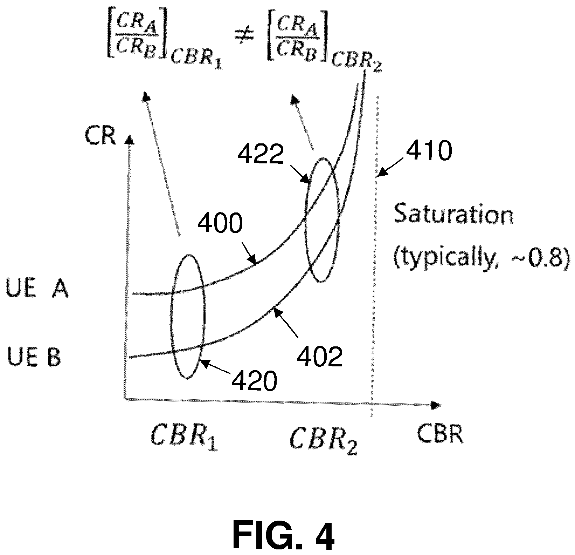

   [Fig. 4] illustrates an example of behavioral model of a user equipment.
**Fig. 5**

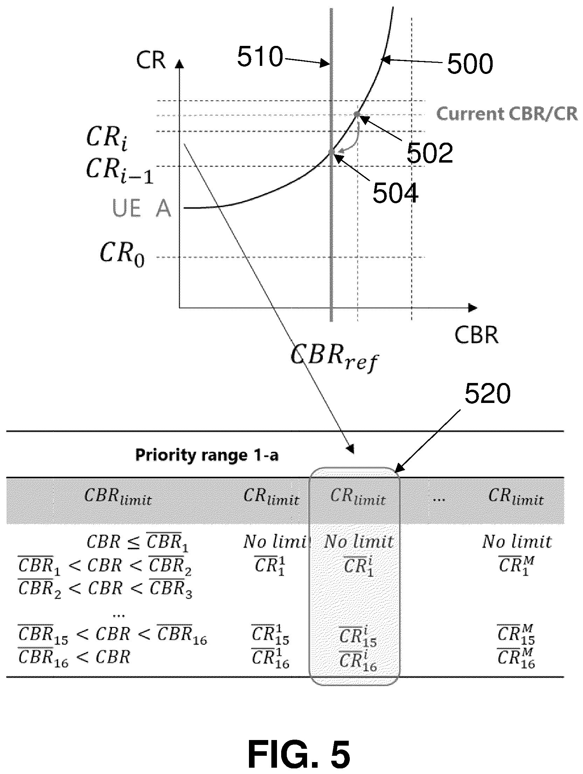

   [Fig. 5] illustrates an example of congestion control mechanism applicable to a user equipment.

### Description of Embodiments

The present disclosure is focused on a proposed technique which encompasses methods, systems and devices adapted to implement an infrastructure-assisted distributed congestion control algorithm for sidelink communications.

The proposed technique may be implemented in various types of communication systems, including for vehicle-to-everything (V2X) applications, i.e., applications that involve connected vehicles to improve road safety, traffic management, cooperative driving, autonomous driving, environmental friendliness, etc. In V2X applications, vehicles can exchange messages with other mobile or nomadic devices but also infrastructure equipment such as roadside units (RSUs). V2X is actually a generic acronym that encompasses vehicle-to-vehicle (V2V), vehicle-to-network (V2N), vehicle-to-infrastructure (V2I), vehicle-to-road side unit (V2R), and vehicle-to-pedestrian (V2P) communications.

The development of V2X applications was triggered in 1999 when the US Federal Communications Commission (FCC) allocated 75 MHz of spectrum in the 5.9 GHz band for intelligent transportation services (ITS). V2X communication technologies have been first devised to implement basic safety applications using standards based on the IEEE 802.11p technology referred to as DSRC in USA and ITS-G5 in Europe. A significant step has been taken in 2017 when the 3rd generation partnership project (3GPP) released the first cellular V2X (C-V2X) standards based on the 4G long term evolution (LTE) system.

Leveraging from their cellular lineage, LTE V2X applications can rely on the 3GPP radio access network (RAN) to interconnect vehicles to V2X servers located on a data network. V2X messages are then exchanged over the Uu air-interface from the vehicles interpreted as user equipment (UEs) and the base stations called node B or gNB in uplink (UL) and from the base stations to the vehicles in downlink (DL). To fulfil the several applications involving the exchange of information between nearby vehicles, the LTE V2X standard also enables direct user-to-user communications, with or without the assistance of base stations, over the so-called sidelink relying on the new PC5 air-interface.

Combining the advantages of both the Uu and PC5 interfaces, the base station can assist the vehicles in the scheduling of the packets over the available radio resources. In this case (Mode 3), the base stations implement a dynamic or a semi-persistent scheduling (SPS) algorithm and inform the UEs about the resources to be used for transmitting their messages. Without the support from the network, UEs implement a sensing-based semi-persistent scheduling (SPS) algorithm that is specified in the standard (Mode 4) to guarantee a fair access to all the UEs.

LTE V2X supports similar services as those supported by DSRC and ITS-G5 systems. These services rely on the broadcast transmission of small awareness messages such as cooperative awareness messages (CAMs) in ITS-G5 or basic safety messages (BSMs) in DSRC to regularly provide basic information such as the location, direction, speed, and acceleration of the transmitting vehicle. LTE V2X rely on the Uu and PC5 air-interface instead of the IEEE802.11p and reuses the upper V2X layers and protocols specified by the European Telecommunications Standardization Institute (ETSI), Institute of Electrical and Electronic Engineers (IEEE) and Society of Automotive Engineers (SAE).

The LTE V2X system was further enhanced in the first 5G standard (release 15) that does not include sidelink aspects based on the 5G new radio (NR) air interface. It is only under release 16 that a 5G NR-based sidelink interface was developed. The NR V2X sidelink (SL) has been developed to complement and not replace LTE V2X SL communications. Indeed, the NR V2X SL is meant to support enhanced V2X (eV2X) use cases related to connected and automated driving. Release 16 defines two new modes (modes 1 and 2) for the selection of radio resources in NR V2X SL communications using the NR V2X PC5 interface. These two modes are the counterparts to modes 3 and 4 in LTE V2X.

Similar to mode 3 in LTE V2X, the base station assigns and manages the SL radio resources for V2V communications under mode 1 using the NR (or LTE) Uu interface. Mode 1 uses a dynamic grant (DG) scheduling like LTE V2X mode 3 but replaces the semi-persistent scheduling in LTE V2X mode 3 with a configured grant (CG) scheduling. UEs can also perform their scheduling without any assistance from the network in mode 2 where radio resources can be allocated using a semi-persistent scheduling scheme that differs from the one designed for mode 4 but also, new in 5G, a dynamic scheme. This new feature was added to fulfil the requirements of advanced V2X applications. For the same reason, while LTE V2X only supports broadcast SL communications, NR V2X supports broadcast, groupcast, and unicast sidelink communications.

Another major enhancement is the support of quality of service (QoS) for sidelink transmissions using mechanisms like those specified over the Uu interface. V2X applications can request the application a given QoS profile where the main requirements are described by a set of QoS characteristics including for instance packet error ratio, packet delay budget, priority, etc. This set of QoS characteristics is identified by the so-called PC5 QoS identifier (PQI), counterpart of the 5G QoS identifier (5QI) in DL/UL. New in sidelink, the QoS profile can also include a range parameter that indicates the applicability of the PC5 QoS parameters in PC5 communication, i.e., when the receiving UEs are not within the range specified distance from the transmitting UE, the communication is best effort.

The UEs autonomously select resources for sidelink transmissions in mode 4 (4G) and mode 2 (5G). One key advantage of this autonomous resource selection is to enable the deployment of services without any support from the cellular infrastructure. The allocation of resources is performed according to a specific algorithm specified in the standard to be equally implemented by all the UEs sharing the same resources. This algorithm is based on a listen-before-talk (LBT) principle where the UEs evaluate if the resources are occupied (from the demodulation of signaling or signal strength measurements) to select those that are the most likely to be available.

To avoid any self-censorship in case the channel is busy, UEs reduce their sensitivity to ultimately select resources whatsoever the channel load. Owing to this principle, reaching high channel loads, many congestion errors, or collisions, can occur leading to possibly intolerable levels of packet losses. To mitigate the impact and minimize the rate of such collisions, both the 4G LTE and 5G NR systems support an optional congestion control mechanism where all the UEs cooperate to keep the channel unsaturated by enforcing a more conservative resource usage. The implementation of congestion control in the 3GPP systems relies on two metrics.

One metric is the channel busy ratio (CBR) which measures the portion of resources in a resource pool which has a high received signal energy (S-RSSI) in the most recent 100 subframes for LTE V2X and the most recent 100 slots (for any µ) or 100·2µ slots by (pre-)configuration per resource pool, where µ is the subcarrier spacing (SCS) configuration factor in 5G NR. CBR is a measurement of the congestion ratio present recently in the resource pool as detailed in TS 36.214 for LTE V2X and TS 38.215 for 5G NR.

The other metric is the channel occupancy ratio (CR) which counts the total number of subchannels a UE has and will transmit in over a window of 1000 subframes in LTE V2X including the current subframe and 1000 slots (for any µ) or 1000·2µ slots by (pre)-configuration per resource pool in 5G NR. CR is thus a measurement of how much resource a UE has recently, and will soon, claim (see TS 36.214 for LTE V2X and 38.215 for 5G NR).

The basic principle of congestion control in sidelink is to force the UEs to equally share the available resources with all the terminals in their radio neighbourhood when the measured CBR exceed a given limit. This basic principle can be summarized by the following pseudocode instruction $if CBR > {\overline{CBR}}_{Limit} enforce CR \leq {\overline{CR}}_{Limit} = \frac{{\overline{CBR}}_{Limit}}{N}$ wherein *CR* is the measured CR, *N* is the number of UEs in the radio neighbourhood of the UE of interest, hereafter referred to as "UEs at reach".

In practice, in NR-V2X systems, where UEs support various services leading to diverse CRs, conventional congestion control might inaccurately predict the number of active UEs at reach. This can result in unfair resource allocation or resource wastage. An alternative would be to estimate *N* from the CBR itself as a function *N = f*(*CBR*) obtained e.g., from offline simulation.

To further simplify, the 3GPP congestion control mechanism relies on tables that can be (pre)-configured in the UEs. The table configured in any given UE defines a set of CBR ranges *C̅B̅R̅_{Limit}* and a corresponding set of CR ranges *C̅R̅_{Limit}* to be enforced at said given UE. Thus, when a UE finds its CR exceeds *C̅R̅_{Limit}* for the CBR range it currently measures, it must reduce its measured CR to not exceed said limit. The standard lets up to UE implementation how to meet the above limits, including dropping the transmissions in subframe n.

But the standard also provisions some possible solutions than may be used by a transmitting UE such as reducing the transmitted power, modifying the modulation and coding scheme (MCS) to reduce resource occupation, dropping (re-)transmissions by hybrid automatic repeat request (HARQ) if any, and/or reducing the number of sub-channels to allocate.

The standard does not specify any algorithm to implement these solutions but enables to (pre)-configure the UEs with values to restrict the following transmission (Tx) parameters: range of MCS for a given MCS table supported within the resource pool, range of number of sub-channels, upper bound of number of (re)transmissions and/or upper bound of Tx power (including zero Tx power).

The standard 3GPP congestion control mechanism accounts for the priority level for each packet. The congestion control is specified as follows: if a UE is configured with higher layer parameter *C̅R̅_{Limit}* for sidelink transmissions (*slC̅R̅_{Limit}*) and transmits data in slot n, the UE shall ensure the following limits for any priority value *l*; ${\sum }_{i \geq l} CR \left[i\right] \leq {\overline{CR}}_{Limit} \left(l\right)$ wherein *CR*[*i*] is the CR evaluated in slot *n* - *N* for the data transmissions with a 'priority' field in the sidelink control information (SCI) set to *i,* with *i* being an integer between 1 and 8, 1 corresponding to the highest priority and *C̅R̅_{Limit}*(*l*) corresponds to the higher layer parameter *slC̅R̅_{Limit}* that is associated with the priority value l and the CBR range which includes the CBR measured in slot *n* - *M,* where *M* is the congestion control processing time.

In LTE V2X, *M* = 4, i.e., the rule is applied using the CBR measured 4 ms before. To adapt to faster fluctuations in congestion due to aperiodic traffic, the NR 5G scheme uses the CBR measured 1 or 2 ms before depending on the processing capability of the UE.

As previously explained, the congestion control is an optional feature. UEs might either be preconfigured with CC tables or dynamically configured using radio resource control (RRC) channels through the Uu interface. The structure and the content of the CC tables is specified in TS 36.331 (RRC) for LTE V2X and TS 38.331 for NR V2X. For NR V2X, up to *N_{pₜₕ}* = 8 tables can be configured, each defined by a priority threshold.

As an example, a first table may be given for priorities between 1 and 4, and a second table for the priorities between 5 to 8, where each table includes up to *N_{cbrₜₕ}* = 16 CBR ranges to each of which may be linked, as summarized by the following pseudocode instruction a CR-limit and the associated Tx parameters, picked up from a list of e.g. 64 pairs: $if {\overline{CBR}}_{k}^{l} \leq CBR < {\overline{CBR}}_{k + 1}^{l} enforce {\sum }_{i \geq l} CR \left[i\right] \leq {\overline{CR}}_{k}^{l}$ wherein *l* is the priority threshold index, *k* ∈ [1*, N_{cbrₜₕ}*] is the CBR threshold index, and ${\overline{CBR}}_{{N}_{{cbr}_{th}} + 1}^{n} = 1$ (implicitly, if $CBR \left(i\right) < {\overline{CBR}}_{1}^{n}$*,* no CR enforcement is applied).

Figure 1 illustrates an example of configuration in 3GPP systems for congestion control tables 100, 102, 104 corresponding to different priority ranges.

Figure 2 provides an example of congestion control table 200 in ETSI 103 574.

Without loss of generality, the proposed technique is described assuming a single congestion control table for all priorities (*N_{pₜₕ} =* 1).

The proposed technique deals with congestion control for sidelink transmissions in 3GPP systems when the radio resources are autonomously selected by the terminals (mode 4 in LTE V2X and mode 2 in NR V2X). Direct user-to-user communications in sidelink enable to deploy V2X applications away from any infrastructure but also to benefit from lower end-to-end latencies and better vehicles density even if the vehicles can connect to a cellular core network. However, sidelink transmissions in mode 4 in V2X LTE and mode 2 in NR V2X can also suffer from severe congestions in case of heavy traffic loads. A congestion control mechanism was added to keep the system unsaturated by limiting the usage of resources according to the number of terminals at reach. The congestion control mechanism was devised at first for basic safety applications with a rather homogenous traffic among the terminals. Congestion control is thus applied by equally sharing the available resources between all the UEs at reach.

Throughout its evolutions, the 3GPP system has increased its capabilities and the scope of supported V2X applications. Within the same area, UEs can now exhibit heterogenous traffic patterns with different transmission schemes, throughputs, QoS, scheduling configurations, etc. With such a traffic heterogeneity, the relationship between the measured CBR and the number of radio neighbours for each UE can significantly vary. Applying congestion control tables computed for a traffic configuration different from the observed one may reduce their performance or even amplify the impact of the congestion. Without a priori knowledge on the traffic, the only solution is to deploy tables corresponding to the most common configuration. But this can be improved if UEs can get some information about the traffic configuration, e.g., from roadside units. For example, it is proposed in European patent application EP23315157.0 to cluster the vehicles according to their traffic characteristics and then deploy congestion control tables optimized to more accurately reflect the relationship between the measured CBR and the number of UEs at reach.

Another limitation of the 3GPP congestion control mechanism when dealing with heterogenous traffics results from the equal sharing of the resources between the UEs at reach. Even if the number of radio neighbours is accurately estimated, the UEs may not make an equal use of the available radio resources depending on their traffic configurations. This may lead to situations where some UEs are allocated with a CR much lower than their needs - at the cost of a deep impact on their applications - and/or some others with more sub-channels than needed - at the cost of a waste of the available resources. The invention described here proposes a solution to this problem in situations where UEs can get information about the traffic from connected devices deployed e.g., along road or railway networks.

The proposed technique applies to various contexts, including for example contexts where a non-public network operator deploys V2X applications in a fleet of vehicles (hereafter, the "managed vehicles") traveling along a road infrastructure equipped with roadside units (RSUs) where at least the managed vehicles and the RSUs communicate using sidelink transmissions.

The proposed technique deals with congestion control for sidelink transmissions in 3GPP systems when the radio resources are autonomously selected by the terminals (mode 4 in LTE V2X and mode 2 in NR V2X). Due to the scheduling algorithm specified for these two modes, sidelink transmissions can suffer from severe congestion in case of heavy traffic loads.

For this reason, 3GPP systems support an optional congestion control mechanism where all the UEs cooperate to keep the channel unsaturated. The principle is to force the UEs to reduce their channel occupancy ratio (CR) when the congestion ratio as measured using the channel busy ratio (CBR) metric exceeds a given limit. With the deployment of new applications and services, UEs can use significantly different portions of the available resources, leading to unfairness when deploying congestion control tables to UEs irrespective of their actual traffic.

The proposed technique takes advantage of the RSU infrastructure to configure the congestion control (CC) - or distributed congestion control (DCC) - tables of the managed vehicles, for instance using an existing RRC-Uu interface and/or another customized interface according to their actual needs in terms of radio resources. Utilizing the RSUs, UEs in a given localized geographical area can be classified based on their specific radio resources needs, which may be measured for instance in terms of channel occupancy ratio (CR). These radio resource needs are denoted in the sequel as CR needs or CR requirements. Note that the 3GPP CC algorithm reduces the number of resources available to each UE irrespective of their actual needs when there is congestion. Applying the proposed technique may also involve reducing the number of resources available to each UE. But while traditional algorithms "allocate" the same number of resources to all UEs, the proposed technique accounts for the difference between the resource needs of the UEs by differentiating the number of resources allocated to each of them using a computing factor. In an example, the computing factor is calculated to account for the proportion of the resources required by each terminal over those required by all the terminals at reach. It is therefore required to estimate the required CR for each terminal. Accordingly, differentiated CC tables are computed for each class to ensure equitable resource access. The UEs are then required to reduce their CR in a proportion that depends on the result of their classification. Solutions to evaluate these needs solely from CBR/CR measurements are proposed relying on federated clustering and learning.

In addressing the challenges of congestion control in dynamic traffic scenarios, two key issues emerge: defining the required channel occupancy ratio (CR) for various traffic conditions, and accounting for the observational limitations of roadside units (RSUs).

Firstly, determining the appropriate CR limit for CC tables is crucial, as it varies according to the diversity of services supported by the UEs. This diversity leads to different CR requirements under various traffic loads and link adaptation conditions. To tackle this, the proposed technique envisions the possibility of computing factors, denoted as *β*(*i*), which are based on the required CR for a reference channel busy ratio (CBR) value denoted *CBR_{ref}.* This approach ensures that CRs are adjusted with fairness for each class of UEs, reflecting their actual resource needs.

Secondly, each RSU typically observes only a portion of the entire vehicular cluster, influenced by factors like the area's topology, traffic around the RSU, and distance from the RSU. Consequently, RSUs may not always obtain measurements that reflect the full range of CBRs, particularly the reference CBR value *CBR_{ref}.* To mitigate this, a curve fitting approach is proposed to allow estimating an underlying function of CR as a function of CBR, even when direct measurements for *CBR_{ref}* are sparse or absent. This estimation may be realized through a federated learning framework, which allows RSUs to collaboratively learn from distributed data without the need for extensive data transfers. Through this method, each RSU can compute the CC tables using the most appropriate CR value, based on the aggregate learning from the network. This ensures that even with limited direct observations, the CC tables remain accurate and reflective of the actual traffic conditions. Implementing this curve fitting approach allows us to adaptively manage congestion in a way that is fair, efficient, and tailored to the diverse needs of all UEs.

An exemplary implementation of the proposed technique is now described in a general context illustrated in figure 3 where an operator deploys V2X applications in a fleet of vehicles 312, 316, 324 traveling along a road infrastructure equipped with roadside units (RSUs) 310, 320 connected to one or several central server(s). Even though this exemplary implementation specifically applies to the context of vehicles traveling along a road infrastructure, the same principle can be applied to robots traveling in a factory, trains traveling over railways, etc.

Depending on their functionality, the vehicles execute different types of applications. Some applications involve transmissions in sidelink with nearby vehicles and others with the RSUs. It is assumed that each vehicle 312, 316, 324 is logically attached to a single RSU 310, 320 at any time. The vehicles 312, 316, 324 handled by the operator are hereafter described as "managed". Managed vehicles also share the roads and interact not only (possibly) with other managed vehicles but also with other vehicles 314, 322 not handled by the operator. These vehicles are hereafter described as "unmanaged". If the managed vehicles rely on sidelink transmissions, it is also assumed that they get connected to a core network through a Uu interface. Thanks to this capability, the V2X applications deployed by the operator can retrieve CBR/CR measurements for the managed vehicles. The Uu interface between the vehicles and base stations 300 also enables to configure the congestion control table of the managed UEs through the Uu-RRC interface (this is not permitted up to 3GPP Release 18 using the PC5-RRC interface).

The proposed technique allows taking advantage of an existing local infrastructure (in the exemplary implementation, a RSU infrastructure) to configure the congestion control tables of the managed UEs (in the exemplary implementation, vehicles) according to their actual needs in terms of radio resources and the "local" traffic conditions. The needs of a UE in terms of radio resources is typically the number of sub-channels required by the UE for scheduling purposes over a predetermined period sufficiently large to get a constant value whatever the time of measurement. At first, it is assumed that only managed UEs share the same radio resources. Basically, the CC table of each UE is computed according to the following pseudocode instruction: $if {\overline{CBR}}_{k} \leq CBR \left(i\right) < {\overline{CBR}}_{k + 1} enforce CR \left(i\right) \leq {\overline{CR}}_{k} = β \left(i\right) \times γ$ $β \left(i\right) = \frac{{CR}_{i}}{{\sum }_{l = 0}^{N - 1} {CR}_{l}}$ wherein
*γ* ∈ ]0,1] is a proportion factor of the available resources, typically *γ = C̅B̅R̅ₖ* such as in the conventional CC tables
*β*(*i*) ∈ ]0,1] measures the ratio of radio resources required by the specific UE with index *i* with respect to all the *N* radio neighbours (including itself),
*CR*(*i*) and *CBR*(*i*) are respectively the measured value of the channel occupancy ratio and channel busy ratio of the UE with index *i,* and
*CRᵢ* is the number of sub-channels required by the UE with index *i* to achieve its transmission.

Any value of *β*(*i*) reflecting the requirement of each UE with respect to the others is suitable. For instance, if all the UEs require the same number of resources, then the coefficient *β*(*i*) may be the same for all UEs: *β*(*i*) = 1/*N*. The required resources *CRᵢ* might be derived from the knowledge of the traffic properties (throughput, payload, period, QoS) for each terminal and the traffic conditions (number of UEs at reach, SINR, etc.), i.e. a set of traffic characteristics that could also be used to classify the UEs. But this kind of information is generally not available at the application level. Instead, it is preferred here to rely solely on the CRs and CBRs measured by the UEs and sent to the 5G core network to estimate the required CR (*CRᵢ*)*.*

In a first step, it is assumed that the number of resources required to support the traffic of each terminal is constant whatever the traffic load i.e., is independent of the measured CBR. It then possible to use the measured CR as the required value, i.e., to make *CRᵢ* = *CR*(*i*). In practice the measured value might be affected by some noise resulting from some payload variations and/or measurements impairments $CR \left(i\right) = {CR}_{i} + n$ wherein n is a centered noise process. The value *CRᵢ* thus needs to be determined from the measurements. Typically, *CRᵢ* can be selected as the average value of the measured CRs, or another percentile value such as the 80^{th} percentile value.

As previously explained, the variation of the CBR depends on the number of UEs at reach but also their traffic properties. The value of the parameter *C̅R̅ₖ* may be optimized for each UE according to the actual radio configuration, e.g., by means of a table with a single entry that may be updated whenever required. But this would require excessive configuration traffic, potentially burdening the configuration interface. Instead, it is wiser to build CC tables valid for a larger number of terminals.

A basic approach consists in dividing the overall set of achievable CRs into ranges. Let's assume that the achievable set of CRs is divided into M ranges such that ${R}_{j} = \left]{CR}_{j - 1}^{th}, {CR}_{j}^{th}\right]$, *j =* 0... *M -* 1. The classification of the UEs can then be performed independently by each RSU by means of simple comparisons. All the UEs attached to each RSU are classified into M categories defined as ${C}_{j} = \left\{i∈\left[0,N-1\right]\left|{CR}_{j - 1}^{th}<CR\left(i\right)\leq {CR}_{j}^{th}\right.\right\} , j ∈ \left[0,M-1\right] .$

Let *Nⱼ = card*(*Cⱼ*) denote the number of UEs belonging to each class *Cⱼ.* To simplify, the required CR for each UE in class *Cⱼ* denoted as *CR_{Cⱼ}* can be selected as the upper value ${CR}_{j}^{th}$*.* Other alternatives might be envisaged such as selecting the middle value for each range. The proportion factor applied to each UE in class *Cⱼ* is computed as follows $β \left[j\right] = \frac{{CR}_{{C}_{j}}}{{\sum }_{l = 0}^{M - 1} {N}_{l} \times {CR}_{{C}_{l}}} .$

Furthermore, we can write $β \left[j\right] = \frac{{N}_{j} \times {CR}_{{C}_{j}}}{{\sum }_{l = 0}^{M - 1} {N}_{l} \times {CR}_{{C}_{l}}} \frac{1}{{N}_{j}} = {β}_{j} \frac{1}{{N}_{j}}$ wherein ${β}_{j} = \frac{{N}_{j} \times {CR}_{{C}_{j}}}{{\sum }_{l = 0}^{M - 1} {N}_{l} \times {CR}_{{C}_{l}}} = \frac{{α}_{j} \times {CR}_{{C}_{j}}}{{\sum }_{l = 0}^{M - 1} {α}_{l} \times {CR}_{{C}_{l}}} ,$ and $\left\{{α}_{0},{α}_{1},…,{α}_{M - 1}\right\} = \left\{\frac{{N}_{0}}{N},\frac{{N}_{1}}{N},…,\frac{{N}_{M - 1}}{N}\right\} .$ where we distinguish the proportion *β*(*i*) of resources required by UE with index *i* from the proportion *β*[*j*] of resources required by each UE in class *Cⱼ* and the proportion *βⱼ* of resources required by all the UEs in class *Cⱼ*. Hence, we have $β \left(i∈{C}_{j}\right) = β \left[j\right] .$

The rule for generating the CC table for UE with index i can be written ${\overline{CBR}}_{k} \leq CBR \left(i\right) < {\overline{CBR}}_{k - 1} enforce CR \left(i\right) \leq {\overline{CR}}_{k , C \left(i\right)} = {β}_{C \left(i\right)} \times \frac{γ}{{N}_{C \left(i\right)}} .$ wherein *C*(*i*) denotes the index of the class UE with index *i* belongs to. Note that the limit value for the CR, denoted *C̅R̅_{k,Cⱼ},* is now separately defined for each class *Cⱼ*. It is thus possible to build a CC table for a given set of proportions {*α*₀*, α*₁*, ..., α*_{*M-*1}} where each table include a column for each class *Cⱼ*. Each UE attached to a given RSU is then configured with the column that corresponds to the class *Cⱼ* it belongs to (to be compatible with current 3GPP specifications). It can also be configured with all the tables and select by itself the required table. CC tables can be computed for a reduced set of proportions factors and UEs are reconfigured when the proportions between the classes significantly change, e.g., using a quadratic distance. These tables would remain valid if the proportions of UEs that fall into each range remains constant.

Instead of arbitrarily dividing the set of CR values into *M* non-overlapping ranges, it is also possible to categorize the UEs according to their CR using any suitable classification method, such as the K-means algorithm. More advanced algorithm can also be used to estimate the number of classes and to allocate the UEs within these classes. The required CR associated to each class can then be defined from the repartition (i.e., distribution) of the CRs associated to the UEs attached to each class.

CC tables for a reference CBR are now discussed.

Up to now, it was assumed that the required CR is constant with respect to the CBR, i.e., the traffic load. But as shown on Figure 4, the number of resources required to support the traffic of each terminal may change with the traffic load, due to e.g., the implementation of a link adaptation mechanism. Curve 400 represents a behavioral model of a first user equipment UE A, obtained for instance by curve fitting from measurements conducted by UE A. Curve 402 similarly represents a behavioral model of a second user equipment UE B. Each curve illustrates the variation of the CR with respect to the CBR. The vertical dotted line 410 signifies a typical saturation point of the network, conventionally around a CBR of 0.8, beyond which the network is considered to be highly congested, potentially leading to diminished QoS and increased packet loss. The ellipses 420 and 422 capture the operational states of UE A and UE B at two distinct CBR thresholds, *CBR*₁ and *CBR*₂ respectively. These states are indicative of the UEs' resource utilization at different points of network congestion. Notably, the ratio ${\left[\frac{{CR}_{A}}{{CR}_{B}}\right]}_{{CBR}_{1}}$ at the first threshold *CBR*₁ is distinct from the ratio ${\left[\frac{{CR}_{A}}{{CR}_{B}}\right]}_{{CBR}_{2}}$ at the second threshold *CBR*₂*,* signifying the unique and dynamic resource needs of each UE as network load varies.

In such a case, it is no more relevant to rely on the assumption *CRᵢ* = *CR*(*i*) (or a percentile value of the measured CRs) for the currently measured *CBR*(*i*) for the UE with index *i.* Indeed, in case of important traffic load, the CR measured for different UEs may be too close, thus not reflecting the actual difference between them in terms of traffic properties. It is proposed here to define the required CR for a reference CBR value, denoted hereafter *CBR_{ref},* i.e., to make *CRᵢ = f_{CR,i}*(*CBR_{ref}*) where *CR*(*i*) *= f_{CR,i}*(*CBR*(*i*)) represents the relationship between the measured CR and CBR for the UE with index *i.*

The reference CBR can be selected equal to a value e.g., that guarantees merely no packet losses due to congestion. The method proposed in the previous section can be applied to this new context where the required CR is no more derived directly from the CR measured under the current radio conditions, but from the value measured for a reference CBR. The classification of the UEs into categories may also be refined from this value to eliminate erroneous decisions from a previous classification. The refined classification further allows determining a refined behavior model for each class. Again, remind that due to some fluctuations in the size of the payload and some measurement inaccuracy, the measured CR is actually a noisy version of the actual value $CR \left(i\right) = {f}_{CR , i} \left(CBR\left(i\right)\right) + n .$ The value *CRᵢ* thus needs to be derived from the CR measurements, e.g., as a percentile value.

The main issue is here that depending on the traffic load, the RSUs shall not be able to get CR measurements for the reference CBR. In such as case, it is not possible to derive the values *CRᵢ* to compute the CC tables. A first solution would be to assume that the overall system (including all the RSUs) can store and share the values *CR*(*i*) *= f_{CR,i}*(*CBR_{ref}*) for all the UEs, such that each RSU can get the required information for each UE that appears in its radio neighborhood.

However, it may occur that some UEs barely meet the conditions for gathering measurements for the selected reference CBR. Instead, it is proposed to learn the function *f_{CR,i}*(.) from the measurements gathered from all the UEs using a curve fitting algorithm, e.g., by applying a nonlinear regression algorithm (to identify the function *f_{CR,i}*() from the "noisy" measurements). The principle is to rely again on the assumption that the agents generate traffic according to a finite set of patterns (number of services, QoS, throughput, etc.). It is thus proposed to perform the learning of the function *f_{CR,Cⱼ}*(*.* ) from measurements obtained for the UEs belonging to the class *Cⱼ.* To avoid unnecessary datasets exchange, it is proposed to perform the leaning using the Federated Learning paradigm, i.e. to apply a federated curve fitting algorithm. To avoid offline simulations, the model is learned live from the CR/CBR measurements. At first, all the UEs are configured to perform no congestion control. If a congestion control is configured, the learning is performed only from the values measured when the CBR is lower than the smaller CBR threshold. Upon completion of the federated curve fitting algorithm between all the RSUs, each RSU has the knowledge of the function *f_{CR,Cⱼ}*(*.*) and can derive the required CR for the reference CBR value, i.e., to make *CR_{Cⱼ} = f_{CR,Cj}*(*CBR_{ref}*)*.* To account for the noise, the RSU can also select *CR_{Cⱼ}* as a percentile value assuming stationary noise properties across all the CBR values (i.e. the RSU assumes the noise has the same statistics for the reference CBR, not necessarily observed locally at the RSU, as for its own CBR measurements).

The learning of the function *f_{CR,Cⱼ}*(*.*) assumes that the classification of the UEs have been performed beforehand. The classification can be performed locally by each RSU that may operate on different CBR ranges (that depends on the traffic load) where the classes identified by each RSU are related to one another when agents travel from one RSU to another one (if the CBR range is small enough, the CR/CBR relationship can be assumed to be constant). It is also possible to apply a federated clustering algorithm between all the RSUs. The classification is performed solely when the UEs are not applying any congestion control that changes the relationship between the CBR and CR preventing from identifying the actual CR needs of these UEs (alternatives might be devised to handle this limitation).

In practice, the radio resources used by the managed UEs may also be shared with other UEs that do not communicate with the RSUs. As these UEs, hereafter denoted as "unmanaged" UEs, cannot be identified by the operator of the non-public network handling the managed UEs, it is not possible to use the CBR/CR measurements they may submit to the core network and thus configure their CC tables. This limitation also extends to some managed UEs that do not permit the online configuration of their CC tables. Therefore, a comprehensive strategy must consider both managed and unmanaged UEs to optimize resource allocation effectively.

In order to account for the unmanaged UEs and certain managed UEs with static CC table configurations, the proposed technique involves evaluating the proportion of resources used by these UEs. A foundational approach is to aggregate (i.e. sum up) at the RSU level the resource usage ratios of all managed UEs with dynamic CC table configurations. This aggregated data can provide an estimate of the resource consumption by unmanaged UEs and managed UEs with static CC table configurations, enabling a more accurate assessment of the overall network conditions and a more comprehensive classification of the managed UEs allowing online configuration of their CC tables. This process ensures that the resource allocation remains fair and efficient, even when direct control over some UEs is not feasible.

Moreover, the proposed technique includes provisions for cases where the diversity of traffic patterns is too extensive, complicating the clustering of UEs based on their CR and CBR measurements. In such scenarios, a more dynamic approach is employed, using a parametric model, potentially developed through neural network algorithms, to describe the behavior of CR and CBR measurements across all UEs. This model accounts for one or more latent variables, also referred to as hidden parameters, such as the payload transmitted over the measurement period for CR. To implement this approach, an identification algorithm may estimate hidden parameters for each UE based on its CR and CBR measurements outside the scope of active congestion control. This process allows for a nuanced and adaptable understanding of UE behavior, enabling more accurate and responsive CC table configurations.

The entries in the CC tables are then tailored to different configurations of network behavior, guided by the identified parameters. This classification is centrally saved by the server and disseminated to each RSU. Importantly, the system allows for periodic retraining and updating of the model to reflect changes in UE traffic patterns over time. This adaptive mechanism ensures that the network remains efficient and responsive to evolving conditions, maximizing the efficacy of the congestion control strategy across both managed and unmanaged UEs.

Figure 5 depicts an exemplary application of a congestion control mechanism.

A user equipment UE A is associated to a behavioral model 500 represented by the curve intersecting at points 502 and 504. UE A belongs to a class of UEs having similar behavioral models and which are associated with a specific column 520 of a lookup table having as many columns as there are classes of UEs after classification. When the congestion control mechanism is applied to UE A, besides the UE is measured with the current CR/CBR values at 502, it is configured with the table that corresponds to the radio requirement associated to the *CBR_{ref}* at 504.

In summary, the proposed technique offers a comprehensive and adaptive solution for managing sidelink communications in complex and dynamic vehicular networks. It balances the needs of both managed and unmanaged UEs, ensuring optimal resource utilization and maintaining the quality of service across the network.

## Claims

1. A communication method comprising:
- determining a congestion ratio for a communication channel based on measured data;
- obtaining, for each terminal in a set of terminals (312, 316, 324), a requirement (504) for radio resources related to the communication channel; and
- determining, individually for each terminal in the set of terminals, a respective congestion control table (520) based on the determined congestion ratio of the communication channel and further based on the requirement of each respective terminal,
the method **characterised by** further comprising classifying each terminal based on its requirement for radio resources into distinct categories and configuring the congestion control table based on the category of the terminal,
wherein the categories are determined based on traffic patterns of the terminals, and
wherein the traffic pattern of a terminal is determined by collecting measurements at the terminal that indicate a behaviour of the terminal under varying network congestion conditions and estimating a relationship between the behaviour of the terminal and the network congestion conditions.

2. The method of claim 1, wherein the communication channel is part of a Vehicle-to-Everything (V2X) system.

3. The method of claim 1 or 2, further incorporating the use of side units (310, 320), distinct from the terminals and in communication with the terminals using the communication channel, for determining the requirement for radio resources of each terminal.

4. The method of any one of claims 1 to 3, where the congestion control tables are dynamically updated based on real-time traffic conditions.

5. The method of any one of claims 1 to 4, wherein the congestion control tables are configured to enforce at least one parameter for Quality of Service (QoS) for each terminal.

6. The method of claim 5, where the at least one parameter include at least one of the following: packet error ratio, packet delay budget, and priority.

7. The method of any one of claims 1 to 6, further comprising using a federated learning approach to refine the configuration of the congestion control tables based on collective data from multiple terminals.

8. The method of claim 7, wherein the federated learning approach includes clustering terminals based on their traffic patterns.

9. The method of any one of claims 1 to 8, wherein the set of terminals is a set of managed terminals and the congestion control table for a terminal is adjusted to account for unmanaged terminals that are distinct from the set of managed terminals and share the same radio resources.

10. The method of claim 9, wherein the adjustment is based on an estimated proportion of resources used by unmanaged terminals (314, 322).

11. A computer-readable medium storing instructions that, when executed by a processor, cause the processor to perform the method of any one of claims 1 to 10.

12. A communication system comprising:
- a congestion ratio determination module configured to determine a congestion ratio for a communication channel based on measured data;
- a resource requirement obtaining module configured to obtain, for each terminal in a set of terminals (312, 316, 324), a requirement (502) for radio resources related to the communication channel; and
- a congestion control table configuration module configured to determine, individually for each terminal in the set of terminals, a respective congestion control table (520) based on the determined congestion ratio of the communication channel and further based on the requirement of each respective terminal,
wherein the communication system is **characterised by** being further configured to classify each terminal based on its requirement for radio resources into distinct categories and configuring the congestion control table based on the category of the terminal,
wherein the categories are determined based on traffic patterns of the terminals, and
wherein the traffic pattern of a terminal is determined by collecting measurements at the terminal that indicate a behaviour of the terminal under varying network congestion conditions and estimating a relationship between the behaviour of the terminal and the network congestion conditions.

## Patentansprüche

1. Kommunikationsverfahren, umfassend:
- Bestimmen eines Überlastungsgrads für einen Kommunikationskanal basierend auf gemessenen Daten;
- Erhalten, für jedes Endgerät in einem Satz von Endgeräten (312, 316, 324), einer Anforderung (504) an Funkressourcen, welche mit dem Kommunikationskanal in Zusammenhang stehen; und
- Bestimmen, individuell für jedes Endgerät in dem Satz von Endgeräten, einer jeweiligen Überlastungssteuerungstabelle (520) basierend auf dem bestimmten Überlastungsgrad des Kommunikationskanals und ferner basierend auf der Anforderung jedes jeweiligen Endgeräts,
wobei das Verfahren **dadurch gekennzeichnet ist, dass** es ferner ein Klassifizieren jedes Endgeräts basierend auf seiner Anforderung an Funkressourcen in unterschiedliche Kategorien und ein Konfigurieren der Überlastungssteuerungstabelle basierend auf der Kategorie des Endgeräts umfasst,
wobei die Kategorien basierend auf Verkehrsmustern der Endgeräte bestimmt werden, und
wobei das Verkehrsmuster eines Endgeräts bestimmt wird durch Sammeln von Messungen an dem Endgerät, welche ein Verhalten des Endgeräts unter variierenden Netzüberlastungsbedingungen anzeigen, und Schätzen einer Beziehung zwischen dem Verhalten des Endgeräts und den Netzüberlastungsbedingungen.

2. Verfahren nach Anspruch 1, wobei der Kommunikationskanal Teil eines Fahrzeug-zu-Allem-(V2X)-Systems ist.

3. Verfahren nach Anspruch 1 oder 2, ferner umfassend die Verwendung von Seiteneinheiten (310, 320), welche von den Endgeräten verschieden sind und mit den Endgeräten unter Verwendung des Kommunikationskanals in Kommunikation stehen, zum Bestimmen der Anforderung an Funkressourcen jedes Endgeräts.

4. Verfahren nach einem der Ansprüche 1 bis 3, wobei die Überlastungssteuerungstabellen dynamisch basierend auf Echtzeit-Verkehrsbedingungen aktualisiert werden.

5. Verfahren nach einem der Ansprüche 1 bis 4, wobei die Überlastungssteuerungstabellen dazu eingerichtet sind, mindestens einen Parameter für eine Dienstgüte (QoS) für jedes Endgerät durchzusetzen.

6. Verfahren nach Anspruch 5, wobei der mindestens eine Parameter mindestens eines der Folgenden umfasst: eine Paketfehlerrate, ein Paketverzögerungsbudget und eine Priorität.

7. Verfahren nach einem der Ansprüche 1 bis 6, ferner umfassend die Verwendung eines föderalen Lernansatzes, um die Konfiguration der Überlastungssteuerungstabellen basierend auf kollektiven Daten von mehreren Endgeräten zu verfeinern.

8. Verfahren nach Anspruch 7, wobei der föderale Lernansatz ein Clustering von Endgeräten basierend auf ihren Verkehrsmustern umfasst.

9. Verfahren nach einem der Ansprüche 1 bis 8, wobei der Satz von Endgeräten ein Satz von verwalteten Endgeräten ist und die Überlastungssteuerungstabelle für ein Endgerät angepasst wird, um nicht verwaltete Endgeräte zu berücksichtigen, welche von dem Satz der verwalteten Endgeräte verschieden sind und die gleichen Funkressourcen teilen.

10. Verfahren nach Anspruch 9, wobei die Anpassung auf einem geschätzten Anteil der von nicht verwalteten Endgeräten (314, 322) verwendeten Ressourcen basiert.

11. Computerlesbares Medium, welches Anweisungen speichert, welche, wenn sie von einem Prozessor ausgeführt werden, den Prozessor veranlassen, das Verfahren nach einem der Ansprüche 1 bis 10 durchzuführen.

12. Kommunikationssystem, umfassend:
- ein Überlastungsgrad-Bestimmungsmodul, welches dazu eingerichtet ist, einen Überlastungsgrad für einen Kommunikationskanal basierend auf gemessenen Daten zu bestimmen;
- ein Ressourcenanforderungs-Ermittlungsmodul, welches dazu eingerichtet ist, für jedes Endgerät in einem Satz von Endgeräten (312, 316, 324) eine Anforderung (502) an Funkressourcen, welche mit dem Kommunikationskanal in Zusammenhang stehen, zu erhalten; und
- ein Überlastungssteuerungstabellen-Konfigurationsmodul, welches dazu eingerichtet ist, individuell für jedes Endgerät in dem Satz von Endgeräten eine jeweilige Überlastungssteuerungstabelle (520) basierend auf dem bestimmten Überlastungsgrad des Kommunikationskanals und ferner basierend auf der Anforderung jedes jeweiligen Endgeräts zu bestimmen,
wobei das Kommunikationssystem **dadurch gekennzeichnet ist, dass** es ferner dazu eingerichtet ist, jedes Endgerät basierend auf seiner Anforderung an Funkressourcen in unterschiedliche Kategorien zu klassifizieren und die Überlastungssteuerungstabelle basierend auf der Kategorie des Endgeräts zu konfigurieren,
wobei die Kategorien basierend auf Verkehrsmustern der Endgeräte bestimmt werden, und
wobei das Verkehrsmuster eines Endgeräts bestimmt wird durch Sammeln von Messungen an dem Endgerät, welche ein Verhalten des Endgeräts unter variierenden Netzüberlastungsbedingungen anzeigen, und Schätzen einer Beziehung zwischen dem Verhalten des Endgeräts und den Netzüberlastungsbedingungen.

## Revendications

1. Procédé de communication comprenant :
- la détermination d'un taux de congestion pour un canal de communication sur la base de données mesurées ;
- l'obtention, pour chaque terminal dans un ensemble de terminaux (312, 316, 324), d'un besoin (504) en ressources radio liées au canal de communication ; et
- la détermination, individuellement pour chaque terminal dans l'ensemble de terminaux, d'un tableau de contrôle de congestion (520) respectif sur la base du taux de congestion déterminé du canal de communication et en outre sur la base du besoin de chaque terminal respectif,
le procédé étant **caractérisé en ce qu'**il comprend en outre la classification de chaque terminal sur la base de son besoin en ressources radio en catégories distinctes et la configuration du tableau de contrôle de congestion sur la base de la catégorie du terminal,
dans lequel les catégories sont déterminées sur la base de modèles de trafic des terminaux, et
dans lequel le modèle de trafic d'un terminal est déterminé par la collecte de mesures au niveau du terminal qui indiquent un comportement du terminal dans des conditions de congestion de réseau variables et l'estimation d'une relation entre le comportement du terminal et les conditions de congestion de réseau.

2. Procédé selon la revendication 1, dans lequel le canal de communication fait partie d'un système Véhicule à tout (V2X).

3. Procédé selon la revendication 1 ou 2, incorporant en outre l'utilisation d'unités latérales (310, 320), distinctes des terminaux et en communication avec les terminaux à l'aide du canal de communication, pour déterminer le besoin en ressources radio de chaque terminal.

4. Procédé selon l'une quelconque des revendications 1 à 3, où les tableaux de contrôle de congestion sont mis à jour dynamiquement sur la base de conditions de trafic en temps réel.

5. Procédé selon l'une quelconque des revendications 1 à 4, dans lequel les tableaux de contrôle de congestion sont configurés pour appliquer au moins un paramètre de qualité de service (QoS) pour chaque terminal.

6. Procédé selon la revendication 5, où l'au moins un paramètre inclut au moins l'un parmi : un taux d'erreur de paquet, un budget de retard de paquet et une priorité.

7. Procédé selon l'une quelconque des revendications 1 à 6, comprenant en outre l'utilisation d'une approche d'apprentissage fédéré pour affiner la configuration des tableaux de contrôle de congestion sur la base de données collectives provenant de plusieurs terminaux.

8. Procédé selon la revendication 7, dans lequel l'approche d'apprentissage fédéré inclut le regroupement de terminaux sur la base de leurs modèles de trafic.

9. Procédé selon l'une quelconque des revendications 1 à 8, dans lequel l'ensemble de terminaux est un ensemble de terminaux gérés et le tableau de contrôle de congestion pour un terminal est ajusté pour tenir compte de terminaux non gérés qui sont distincts de l'ensemble de terminaux gérés et partagent les mêmes ressources radio.

10. Procédé selon la revendication 9, dans lequel l'ajustement est basé sur une proportion estimée de ressources utilisées par des terminaux non gérés (314, 322).

11. Support lisible par ordinateur stockant des instructions qui, lorsqu'elles sont exécutées par un processeur, amènent le processeur à réaliser le procédé selon l'une quelconque des revendications 1 à 10.

12. Système de communication comprenant :
- un module de détermination de taux de congestion configuré pour déterminer un taux de congestion pour un canal de communication sur la base de données mesurées ;
- un module d'obtention de besoin de ressources configuré pour obtenir, pour chaque terminal dans un ensemble de terminaux (312, 316, 324), un besoin (502) en ressources radio liées au canal de communication ; et
- un module de configuration de tableau de contrôle de congestion configuré pour déterminer, individuellement pour chaque terminal de l'ensemble de terminaux, un tableau de contrôle de congestion (520) respectif sur la base du taux de congestion déterminé du canal de communication et en outre sur la base du besoin de chaque terminal respectif,
dans lequel le système de communication est **caractérisé en ce qu'**il est en outre configuré pour classifier chaque terminal sur la base de son besoin en ressources radio en catégories distinctes et configurer le tableau de contrôle de congestion sur la base de la catégorie du terminal,
dans lequel les catégories sont déterminées sur la base de modèles de trafic des terminaux, et
dans lequel le modèle de trafic d'un terminal est déterminé par la collecte de mesures au niveau du terminal qui indiquent un comportement du terminal dans des conditions de congestion de réseau variables et l'estimation d'une relation entre le comportement du terminal et les conditions de congestion de réseau.
